# EUROPEAN PATENT APPLICATION

(11) **EP 4 597 870 A2**
(43) Date of publication of application: **06.08.2025**
(21) Application number: 25152201.7
(22) Date of filing: 16.01.2025
(51) Int. Cl.: H04B 7/06

(54) **ENHANCED BEAM MANAGEMENT IN CELLULAR COMMUNICATION NETWORKS**

(30) Priority: 02.02.2024 GB 202401362
(71) Applicant: Nokia Technologies Oy, 02610 Espoo (FI)
(72) Inventor: KOSKELA, Timo, Oulu (FI); LADDU, Keeth Saliya Jayasinghe, Espoo (FI); KARJALAINEN, Juha Pekka, Sotkamo (FI); HAKOLA, Sami-Jukka, Oulu (FI); ENESCU, Mihai, Espoo (FI)
(74) Representative: Nokia EPO representatives

(57) **Abstract**

According to an example aspect of the present disclosure, there is provided a method, comprising receiving, by a user equipment, a downlink control message, the downlink control message comprising a configuration for transmission configuration indicator, TCI, state switching, determining by the user equipment, based on the configuration, at least one first TCI state for use during a first time interval, determining by the user equipment, based on the configuration, at least one second TCI state for use during a second time interval, wherein the first time interval and the second time interval are non-overlapping and performing by the user equipment, based on said determinations, said TCI state switching.

## Description

### FIELD

Various example embodiments relate in general to cellular communication networks and more specifically, to beam management in such networks.

### BACKGROUND

Beam management may refer to a set of functionalities that can be used to enhance operation of beam-based wireless communication systems. Beam management may be used for example in various cellular communication networks, such as, in cellular communication networks operating according to 5G radio access technology. 5G radio access technology may also be referred to as New Radio, NR, access technology. 3rd Generation Partnership Project, 3GPP, develops standards for 5G/NR and one of the topics in the 3GPP discussions is related to beam management. According to the discussions there is a need to provide enhanced methods, apparatuses and computer programs related to beam management in cellular communication networks. Such enhancements may also be beneficial in other wireless communication networks as well.

### SUMMARY

According to some aspects, there is provided the subject-matter of the independent claims. Some example embodiments are defined in the dependent claims.

The scope of protection sought for various example embodiments of the disclosure is set out by the independent claims. The example embodiments and features, if any, described in this specification that do not fall under the scope of the independent claims are to be interpreted as examples useful for understanding various example embodiments of the disclosure.

According to an aspect of the present disclosure, there is provided an apparatus comprising at least one processing core and at least one memory storing instructions that, when executed by the at least one processing core, cause the apparatus at least to: receive a downlink control message, the downlink control message comprising a time domain configuration for Transmission Configuration Indicator, TCI, state switching and perform, based on the time domain configuration, said TCI state switching. The apparatus may be a user equipment or a control device configured to control the functioning thereof, possibly when installed therein. Example embodiments of the aspect may comprise at least one feature from the following bulleted list or any combination of the following features:
- wherein the time domain configuration comprises at least one of: indication of time domain sequence of TCI states, time domain sequence of TCI states, switching interval, or switching periodicity;
- wherein the at least one processing core and the at least one memory further cause the apparatus at least to perform said TCI switching based on at least one time interval, wherein the at least one time interval determines when to switch from at least one TCI state to at least one other TCI state;
- wherein the downlink control message comprises one or more codepoints and each codepoint indicates a time interval and at least one TCI state to which to switch for the time interval;
- wherein the downlink control message comprises a field indicating whether said one or more codepoints indicate a time domain sequence of TCI states or a set of TCI states to be activated;
- wherein said one or more codepoints are listed in the order in which the TCI states indicated by said one or more codepoints are to be used by the apparatus;
- wherein said one or more codepoints comprise a first codepoint indicating at least one first TCI state to be used for a first time interval and a second codepoint indicating at least one second TCI state to be used for a second time interval, wherein the first and second time intervals are non-overlapping;
- wherein the downlink control message comprises a time interval field indicating a time interval of said TCI state switching;
- wherein the downlink control message comprises time interval fields, wherein each time interval field indicates a time interval of one TCI state switching;
- wherein the at least one processing core and the at least one memory further cause the apparatus at least to determine that a last configured TCI state of said TCI switching has been reached and a time interval associated with the last configured TCI state has been passed and based on said determination, use the last configured TCI state until receiving another downlink control message or indicate to the wireless network that the time interval associated with the last configured TCI state has been passed;
- wherein the downlink control message comprises a medium access control control element, MAC CE.

According to an aspect of the present disclosure, there is provided an apparatus comprising at least one processing core and at least one memory storing instructions that, when executed by the at least one processing core, cause the apparatus at least to determine a time domain configuration for Transmission Configuration Indicator, TCI, state switching and transmit, to a user equipment, a downlink control message comprising the time domain configuration, to configure the user equipment to perform said TCI state switching. The apparatus may be a wireless network node or a control device configured to control the functioning thereof, possibly when installed therein.

According to an aspect of the present disclosure, there is provided an apparatus comprising at least one processing core and at least one memory storing instructions that, when executed by the at least one processing core, cause the apparatus at least to receive a downlink control message, the downlink control message comprising a configuration, wherein the configuration comprises one or more codepoints, wherein each codepoint associates with a time interval and indicates at least one Transmission Configuration Indicator, TCI, state to which to switch for the time interval, for performing TCI state switching and perform, based on the configuration, said TCI state switching. The apparatus may be a user equipment or a control device configured to control the functioning thereof, possibly when installed therein. Example embodiments of the aspect may comprise at least one feature from the following bulleted list or any combination of the following features:
- wherein each codepoint associates with a specific time interval;
- wherein the downlink control message comprises one or more time interval fields each indicating the specific time interval for each of said one or more codepoints;
- wherein said one or more codepoints share a common time interval;
- wherein the downlink control message comprises the common time interval;
- wherein said TCI state switching comprises using at least one first TCI state for a first time interval and at least one second TCI state for a second time interval, wherein the first and second time intervals are non-overlapping;
- wherein a first codepoint of said one or more codepoints indicates at least one first TCI state to be used during a first time interval and a second codepoint of said one or more codepoints indicates at least one second TCI state to be used during a second time interval, wherein the first and second time intervals are non-overlapping;
- wherein the downlink control message comprises a field indicating whether said one or more codepoints indicate a time domain sequence of TCI states or a set of TCI states to be activated;
- wherein said one or more codepoints are listed in the order in which the TCI states indicated by said one or more codepoints are to be used by the apparatus;
- wherein the at least one processing core and the at least one memory further cause the apparatus at least to switch to a next codepoint after a time interval has passed from a previous switching;
- wherein the at least one processing core and the at least one memory further cause the apparatus at least to start to perform the TCI state switching after acknowledging the downlink control message or start to perform the TCI state switching after a delay timer or start to perform the TCI state switching after acknowledging the downlink control message after a delay timer.

According to an aspect of the present disclosure, there is provided an apparatus comprising at least one processing core and at least one memory storing instructions that, when executed by the at least one processing core, cause the apparatus at least to determine a configuration for configuring a user equipment to perform Transmission Configuration Indicator, TCI, state switching, wherein the configuration comprises one or more codepoints and each codepoint associates with a time interval and indicates at least one TCI state to which to switch for the time interval and transmit, to a user equipment, a downlink control message comprising the configuration, to configure the user equipment to perform said TCI state switching. The apparatus may be a wireless network node or a control device configured to control the functioning thereof, possibly when installed therein.

According to an aspect of the present disclosure, there is provided an apparatus comprising at least one processing core and at least one memory storing instructions that, when executed by the at least one processing core, cause the apparatus at least to receive a downlink control message, the downlink control message comprising a periodicity configuration for performing periodic Transmission Configuration Indicator, TCI, state switching and perform, based on the periodicity configuration, said periodic TCI state switching. The apparatus may be a user equipment or a control device configured to control the functioning thereof, possibly when installed therein. Example embodiments of the aspect may comprise at least one feature from the following bulleted list or any combination of the following features:
- wherein said periodic TCI state switching comprises using at least one first TCI state for a first time interval and at least one second TCI state for a second time interval, wherein the first and second time intervals are non-overlapping and have a same length;
- wherein the at least one processing core and the at least one memory further cause the apparatus at least to perform said periodic TCI switching based on one time interval, wherein said one time interval determines when to switch from at least one TCI state to at least one other TCI state;
- wherein the downlink control message comprises a medium access control control element, and wherein the periodicity configuration is indicated in a periodicity configuration field as part of the downlink control message;
- wherein one time interval determines a periodicity of said periodic TCI state switching;
- wherein the downlink control message comprises one or more codepoints and each codepoint indicates at least one TCI state, wherein said one or more codepoints share a same periodicity configuration;
- wherein the downlink control message comprises a time interval field indicating a time interval for said periodic TCI state switching;
- wherein a time interval of said periodic TCI state switching is fixed;
- wherein a time interval of said periodic TCI switching is expressed in the order of milliseconds;
- wherein the at least one processing core and the at least one memory further cause the apparatus at least to switch to a next codepoint after a time interval for said periodic TCI state switching has passed from a previous switching;
- wherein the downlink control message comprises one or more TCI states, wherein the one or more TCI states correspond to reference signals from one of: a first set of predicted reference signals, a second set of measured reference signals, or a third set of mix of measured reference signals and predicted reference signals.

According to an aspect of the present disclosure, there is provided an apparatus comprising at least one processing core and at least one memory storing instructions that, when executed by the at least one processing core, cause the apparatus at least to determine a periodicity configuration for configuring a user equipment to perform periodic Transmission Configuration Indicator, TCI, state switching and transmit, to the user equipment, a downlink control message comprising the periodicity configuration, to configure the user equipment to perform said periodic TCI state switching. The apparatus may be a wireless network node or a control device configured to control the functioning thereof, possibly when installed therein.

According to an aspect of the present disclosure, there is provided an apparatus comprising at least one processing core and at least one memory storing instructions that, when executed by the at least one processing core, cause the apparatus at least to receive a downlink control message, the downlink control message comprising a configuration for transmission configuration indicator, TCI, state switching, determine, based on the configuration, at least one first TCI state for use during a first time interval, determine, based on the configuration, at least one second TCI state for use during a second time interval, wherein the first time interval and the second time interval are non-overlapping and perform, based on said determinations, said TCI state switching. The apparatus may be a user equipment or a control device configured to control the functioning thereof, possibly when installed therein. Example embodiments of the aspect may comprise at least one feature from the following bulleted list or any combination of the following features:
- wherein the apparatus is further configured at least to apply the at least one first TCI state during the first time interval and apply, after the first time interval, the at least one second TCI state during the second time interval;
- wherein the apparatus is further configured at least to determine, based on a first codepoint in the downlink control message, to apply the at least one first TCI state during the first time interval and determine, based on a second codepoint in the downlink control message, to apply the at least one second TCI state during the second time interval;
- wherein the apparatus is further configured at least to apply, based on determining that the first codepoint is listed sequentially before the second codepoint in the downlink control message, the at least one first TCI state sequentially before the at least one second TCI state;
- wherein the apparatus is further configured at least to determine that the downlink control message comprises a field indicating whether one or more codepoints in the downlink control message indicate a time domain sequence of TCI states or a set of TCI states to be activated;
- wherein the configuration is a time domain configuration comprising at least one of: indication of time domain sequence of TCI states, time domain sequence of TCI states, switching interval, or switching periodicity;
- wherein the apparatus is further configured at least to determine that the configuration is a periodicity configuration for periodic TCI state switching and perform said TCI switching by performing said periodic TCI state switching;
- wherein the at least one processing core and the at least one memory further cause the apparatus at least to determine that the configuration comprises one or more codepoints and each codepoint associates with a time interval and indicates at least one TCI state to which to switch for the time interval, for performing TCI state switching and perform, based on said one or more codepoints, said TCI switching;
- wherein the apparatus is further configured at least to receive another control message comprising a configuration to configure the apparatus to perform at least one of: a beam prediction, reporting of results of the beam prediction or reporting measurements and perform, based on said another control message, at least one of: the beam prediction, reporting of results of the beam prediction or reporting measurements;

- wherein the apparatus is further configured at least to determine at least one time interval for said TCI state switching based on at least one of:
   ∘ radio resource control, RRC, configuration;
   ∘ prediction period and/or multiples of prediction periods;
   ∘ prediction reporting period;
   ∘ measurement period for the measurements used as input for the predictor; or
   ∘ measurement period for the measurements to be reported to network;
- wherein the apparatus is further configured at least to determine that at least one time interval TCI state is associated with a plurality of TCI states, determine the plurality of TCI states to be as activated TCI States for downlink control indication, DCI, -based beam indication, receive a DCI indicating one or more codepoints, wherein each codepoint indicates at least one TCI State from the activated TCI states and apply the at least one TCI state as an indicated TCI state within the at least one time interval;
- wherein the apparatus is further configured at least to apply said TCI switching for reception or transmission of at least one of the following Physical Downlink Control Channel, PDCCH, Physical Downlink Shared Channel, PDSCH, Physical Uplink Control Channel, PUCCH, Physical Uplink Shared Channel, PUSCH, Sounding Reference Signal, SRS, uplink signal/channel or downlink signal/channel.

According to an aspect of the present disclosure, there is provided an apparatus comprising at least one processing core and at least one memory storing instructions that, when executed by the at least one processing core, cause the apparatus at least to determine at least one first transmission configuration indicator, TCI, state for use by a user equipment during a first time interval, determine at least one second TCI state for use by the user equipment during a second time interval, wherein the first time interval and the second time interval are non-overlapping, transmit, to the user equipment, a downlink control message comprising a time domain configuration for TCI state switching using the at least one first TCI state and the at least one second TCI state. The apparatus may be a wireless network node or a control device configured to control the functioning thereof, possibly when installed therein.

According to an aspect, there is provided a method comprising, receiving a downlink control message, the downlink control message comprising a time domain configuration for Transmission Configuration Indicator, TCI, state switching and performing, based on the time domain configuration, said TCI state switching. The method may be performed by a user equipment or a control device configured to control the functioning thereof, possibly when installed therein.

According to an aspect, there is provided a method comprising, determining a time domain configuration for Transmission Configuration Indicator, TCI, state switching and transmitting, to a user equipment, a downlink control message comprising the time domain configuration, to configure the user equipment to perform said TCI state switching. The method may be performed by a wireless network node or a control device configured to control the functioning thereof, possibly when installed therein.

According to an aspect, there is provided a method comprising, receiving a downlink control message, the downlink control message comprising a configuration, wherein the configuration comprises one or more codepoints, wherein each codepoint associates with a time interval and indicates at least one Transmission Configuration Indicator, TCI, state to which to switch for the time interval, for performing TCI state switching and performing, based on the configuration, said TCI state switching. The method may be performed by a user equipment or a control device configured to control the functioning thereof, possibly when installed therein.

According to an aspect, there is provided a method comprising, determining a configuration for configuring a user equipment to perform Transmission Configuration Indicator, TCI, state switching, wherein the configuration comprises one or more codepoints and each codepoint associates with a time interval and indicates at least one TCI state to which to switch for the time interval and transmitting, to a user equipment, a downlink control message comprising the configuration, to configure the user equipment to perform said TCI state switching. The method may be performed by a wireless network node or a control device configured to control the functioning thereof, possibly when installed therein.

According to an aspect, there is provided a method comprising, receiving a downlink control message, the downlink control message comprising a periodicity configuration for performing periodic Transmission Configuration Indicator, TCI, state switching and performing, based on the periodicity configuration, said periodic TCI state switching. The method may be performed by a user equipment or a control device configured to control the functioning thereof, possibly when installed therein.

According to an aspect, there is provided a method comprising, determining a periodicity configuration for configuring a user equipment to perform periodic Transmission Configuration Indicator, TCI, state switching and transmitting, to the user equipment, a downlink control message comprising the periodicity configuration, to configure the user equipment to perform said periodic TCI state switching. The method may be performed by a wireless network node or a control device configured to control the functioning thereof, possibly when installed therein.

According to an aspect, there is provided a method comprising, receiving a downlink control message, the downlink control message comprising a configuration for transmission configuration indicator, TCI, state switching, determining, based on the configuration, at least one first TCI state for use during a first time interval, determining, based on the configuration, at least one second TCI state for use during a second time interval, wherein the first time interval and the second time interval are non-overlapping and performing, based on said determinations, said TCI state switching. The method may be performed by a user equipment or a control device configured to control the functioning thereof, possibly when installed therein.

According to an aspect, there is provided a method comprising, determining at least one first transmission configuration indicator, TCI, state for use by a user equipment during a first time interval, determining at least one second TCI state for use by the user equipment during a second time interval, wherein the first time interval and the second time interval are non-overlapping, transmitting, to the user equipment, a downlink control message comprising a time domain configuration for TCI state switching using the at least one first TCI state and the at least one second TCI state. The method may be performed by a wireless network node or a control device configured to control the functioning thereof, possibly when installed therein.

According to an aspect of the present disclosure, there is provided an apparatus comprising means for receiving a downlink control message, the downlink control message comprising a time domain configuration for Transmission Configuration Indicator, TCI, state switching and means for performing, based on the time domain configuration, said TCI state switching. The apparatus of the aspect may be a user equipment or a control device configured to control the functioning thereof, possibly when installed therein.

According to an aspect of the present disclosure, there is provided an apparatus comprising means for determining a time domain configuration for Transmission Configuration Indicator, TCI, state switching and means for transmitting, to a user equipment, a downlink control message comprising the time domain configuration, to configure the user equipment to perform said TCI state switching. The apparatus of the aspect may be a wireless network node or a control device configured to control the functioning thereof, possibly when installed therein.

According to an aspect of the present disclosure, there is provided an apparatus comprising means for receiving a downlink control message, the downlink control message comprising a configuration, wherein the configuration comprises one or more codepoints, wherein each codepoint associates with a time interval and indicates at least one Transmission Configuration Indicator, TCI, state to which to switch for the time interval, for performing TCI state switching and means for performing, based on the configuration, said TCI state switching. The apparatus of the aspect may be a user equipment or a control device configured to control the functioning thereof, possibly when installed therein.

According to an aspect of the present disclosure, there is provided an apparatus comprising means for determining a configuration for configuring a user equipment to perform Transmission Configuration Indicator, TCI, state switching, wherein the configuration comprises one or more codepoints and each codepoint associates with a time interval and indicates at least one TCI state to which to switch for the time interval and means for transmitting, to a user equipment, a downlink control message comprising the configuration, to configure the user equipment to perform said TCI state switching. The apparatus of the aspect may be a wireless network node or a control device configured to control the functioning thereof, possibly when installed therein.

According to an aspect of the present disclosure, there is provided an apparatus comprising means for receiving a downlink control message, the downlink control message comprising a periodicity configuration for performing periodic Transmission Configuration Indicator, TCI, state switching and means for performing, based on the periodicity configuration, said periodic TCI state switching. The apparatus of the aspect may be a user equipment or a control device configured to control the functioning thereof, possibly when installed therein.

According to an aspect of the present disclosure, there is provided an apparatus comprising means for determining a periodicity configuration for configuring a user equipment to perform periodic Transmission Configuration Indicator, TCI, state switching and means for transmitting, to the user equipment, a downlink control message comprising the periodicity configuration, to configure the user equipment to perform said periodic TCI state switching. The apparatus of the aspect may be a wireless network node or a control device configured to control the functioning thereof, possibly when installed therein.

According to an aspect of the present disclosure, there is provided a computer program comprising instructions which, when the program is executed by an apparatus, cause the apparatus to carry out one or more of the methods.

According to an aspect of the present disclosure, there is provided a non-transitory computer readable medium having stored thereon a set of computer readable instructions that, when executed by at least one processor, cause an apparatus to at least perform one or more of the methods.

### BRIEF DESCRIPTION OF THE DRAWINGS

FIG. 1 illustrates an example of a network scenario in accordance with at least some example embodiments;
FIG. 2 illustrates a sequence of codepoints indicating TCI State IDs with one TCI State ID per codepoint in accordance with at least some example embodiments;
FIG. 3 illustrates an indication for sequential or non-sequential TCI state activation in accordance with at least some example embodiments;
FIG. 4 illustrates a field in a control message indicating switching period between sequential codepoints in accordance with at least some example embodiments;
FIG. 5 illustrates a downlink control message providing of set of TCI states per step of a sequence in accordance with at least some example embodiments;
FIG. 6 illustrates a TCI state ID/codepoint specific SI field in accordance with at least some example embodiments;
FIG. 7 illustrates a signaling diagram in accordance with at least some example embodiments;
FIG. 8 illustrates an example apparatus capable of supporting at least some example embodiments;
FIG. 9 illustrates a flow graph of a first method in accordance with at least some example embodiments;
FIG. 10 illustrates a flow graph of a second method in accordance with at least some example embodiments;
FIG. 11 illustrates a flow graph of a third method in accordance with at least some example embodiments;
FIG. 12 illustrates a flow graph of a fourth method in accordance with at least some example embodiments.

### EXAMPLE EMBODIMENTS

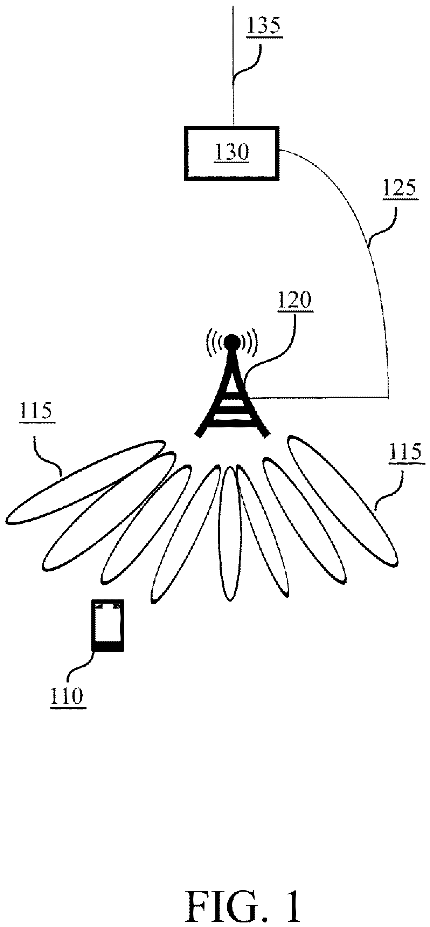

FIG. 1 illustrates an example of a network scenario in accordance with at least some example embodiments. According to the example scenario of FIG. 1, there may be a beam-based wireless communication system, which comprises UE 110, wireless network node 120 and core network element 130. UE 110 may be connected to wireless network node 120 via air interface using beams 115, either simultaneously or one at a time.

UE 110 may comprise, for example, a smartphone, a cellular phone, a Machine-to-Machine, M2M, node, Machine-Type Communications, MTC, node, an Internet of Things, IoT, node, a car telemetry unit, a laptop computer, a tablet computer or, indeed, any kind of suitable wireless terminal. In the example system of FIG. 1, UE 110 may communicate wirelessly with wireless network node 120 via at least one beam 115. Wireless network node 120 may be considered as a serving node for UE 110 and one cell of wireless network node 120 may be a serving cell for UE 110.

Air interface between UE 110 and wireless network node 120 may be configured in accordance with a Radio Access Technology, RAT, which both UE 110 and wireless network node 120 are configured to support. Examples of cellular RATs include Long Term Evolution, LTE, New Radio, NR, which may also be known as fifth generation, 5G, radio access technology, 6G radio access technology, and MulteFire.

For example in the context of LTE, wireless network node 120 may be referred to as eNB while wireless network node 120 may be referred to as gNB in the context of NR. In some example embodiments, wireless network node 120 may be referred to as a Transmission and Reception Point, TRP, or control multiple TRPs that may be co-located or non-co-located. In any case, example embodiments of the present disclosure are not restricted to any particular wireless technology. Instead, example embodiments may be exploited in any beam-based wireless communication system, wherein beam management would be beneficial.

Wireless network node 120 may be connected, directly or via at least one intermediate node, with core network 130 via interface 125. Core network 130 may be, in turn, coupled via interface 135 with another network (not shown in FIG. 1), via which connectivity to further networks may be obtained, for example via a worldwide interconnection network. Wireless network node 120 may be connected, directly or via at least one intermediate node, with core network 130 or with another core network.

In some example embodiments, the network scenario may comprise a relay node instead of, or in addition to, UE 110 and/or wireless network node 120. Relaying may be used for example when operating on millimeter-wave frequencies. One example of the relay node may be an Integrated Access and Backhaul, IAB, node. The IAB node may be referred to as a self-backhauling relay as well. Another example of a relay may be an out-band relay. In general, the relay node may comprise two parts:
1) Distributed Unit, DU, part which may facilitate functionalities of wireless network node 120, such as a gNB. Thus, in some example embodiments, the DU part of a relay may be referred to as wireless network node 120 and the DU may perform tasks of wireless network node 120;
2) Mobile Termination, MT, part which may facilitate functionalities of UE 110, i.e., a backhaul link which may be the communication link between a parent node (DU), such as a DU part of wireless network node 120, and the relay, such as an IAB node.

In some example embodiments, the MT part may be referred to as UE 110 and perform tasks of UE 110.

Quasi Co-Location, QCL, indication functionality may be exploited for beam management. Two antenna ports may be considered as QCL'ed if properties of a channel over which a symbol is transmitted via a first antenna port can be derived from a channel over which a symbol is transmitted via a second antenna port. Regarding downlink beam indication, QCL indication functionality may be defined as follows. The principle to receive a certain physical signal or physical channel may be that UE 110 is either configured with, or UE 110 implicitly determines, a source/reference Reference Signal, RS, that UE 110 has received and measured earlier which defines how to set a receive beam of UE 110 for the reception of the downlink (target) physical signal or channel to be received. To provide UE 110 with QCL characteristics for the target signal (to be received) a TCI framework may be used.

According to the TCI framework, UE 110 may be configured with TCI state(s) to provide UE 110 with source RS(s) for determining QCL characteristics. Each TCI state may include for example one or two source RSs that provide QCL TypeA, TypeB, TypeC and/or TypeD parameters to UE 110, e.g., as follows:
- QCL-TypeA: {Doppler shift, Doppler spread, average delay, delay spread}
- QCL-TypeB: {Doppler shift, Doppler spread}
- QCL-TypeC: {Doppler shift, average delay}
- QCL-TypeD: {Spatial Rx parameter}

Example embodiments of the present disclosure provide enhancements at least for beam prediction in temporal/time domain, which may be referred to as BM-case2. In case of temporal beam prediction, UE 110 may be configured to predict a sequence of beams, i.e., downlink reference signals, which may form a first set of beams, such as a set A. UE 110 may be further configured to predict the sequence of beams, based on the measurement sequence of (historic) measurement results on indicated beams, such as downlink reference signals, from a second set of beams, such as a set B.

The first set of beams may be a predicted set, i.e., an output set as a result of inference and the second set of beams may be a measured set, i.e., an input set for inference. UE 110 may be configured to report the prediction result (the first set of beams, set A) of an AI/MI, model and in response, wireless network node 120 may activate (and/or indicate) the TCI State(s) corresponding to the predicted beam, from the first of beams in case of the UE-sided model. As a pre-requisite, the beams, i.e., the RS, in the second of beams may be signaled to UE 110 in terms of RS configuration and QCL assumptions. Alternatively, UE 110 may be configured to report measurements on the second set of beams, (set B) and wireless network node 120 may perform the inference in case of network-sided model.

Wireless network node 120 may activate one or more TCI states and indicate at least one TCI State, possibly jointly for uplink and downlink, or a pair of TCI States for UE 110 to apply for uplink and downlink channels, such as at least one of Physical Downlink Control Channel, PDCCH, Physical Downlink Shared Channel, PDSCH, Physical Uplink Control Channel, PUCCH, or Physical Uplink Shared Channel, PUSCH. As a result of the time domain prediction, a sequence of RS resource(s) may be obtained that are associated with the TCI States configured for UE 110. The RS resource sequence that maps to TCI States may make it possible for wireless network node 120 to switch downlink and/or uplink transmit beams for UE 110 in a "transparent" manner, i.e., to indicate the switching individually for each of the predicted RSs.

Example embodiments of the present disclosure therefore provide enhancements for leveraging and/or enhancing the Beam Management, BM, and TCI state framework, to support beam indication for the set of RSs obtained from the time domain beam prediction, thereby enabling efficient beam switching operation.

In some example embodiments, wireless network node 120 may transmit a downlink control message to configure UE 110 to perform sequential TCI state switch operation. The downlink control message may comprise a time domain configuration for performing TCI state switching and UE 110 may perform, based on the received time domain configuration, said TCI state switching. The time domain configuration may comprise at least one of: indication of time domain sequence of TCI states, time domain sequence of TCI states, switching interval, or switching periodicity.

In some example embodiments, the downlink control message may comprise a configuration, wherein the configuration may comprise one or more codepoints. Each codepoint may be associated with a time interval and indicate at least one TCI state to which to switch for the time interval for performing TCI state switching. That is, the downlink control message may comprise one or more TCI state codepoints mapped to one or more TCI states, for downlink only (without uplink), or downlink and uplink. UE 110 may further perform, based on the configuration, said TCI state switching.

In some example embodiments, the downlink control message may comprise a field indicating whether the one or more codepoints indicate a time domain sequence of TCI states or a set of TCI states to be activated. That is, the field may indicate whether the one or more codepoints listed in the downlink control message are to be interpreted as the time domain sequence of TCI states that are activated/indicated to UE 110, or to be interpreted as a set of activated TCI states (at each time period/instant in the sequence).

In some example embodiments, the downlink control message may comprise one or more codepoints and each codepoint may be associated with a time interval and the codepoint may indicate at least one TCI state to which to switch for the (duration of the) time interval. That is, the downlink control message may indicate one or more codepoints for a sequential TCI state switch. In some examples, the downlink control message may indicate one or more codepoints for a sequential TCI state switch and comprise at least one field indicating the periodicity/interval for the switching sequence. In some examples, the downlink control message may indicate one or more codepoints for a sequential TCI state switching according to a time interval (that may be configured by network). Each codepoint may indicate an Identifier, ID, of at least one TCI state and hence be associated with the at least one TCI state.

In some example embodiments, the downlink control message may comprise a periodicity configuration for performing periodic TCI state switching and UE 110 may perform, based on the received periodicity configuration, said periodic TCI state switching. The configuration may be used to configure activation/indication of TCI states, wherein a time interval for said periodic TCI state switching may be fixed (e.g., predefined or configured). In some example embodiments, UE 110 may determine that a configuration received in the downlink control message is a periodicity configuration for periodic TCI state switching and perform, based on said determination, TCI switching by performing said periodic TCI state switching.

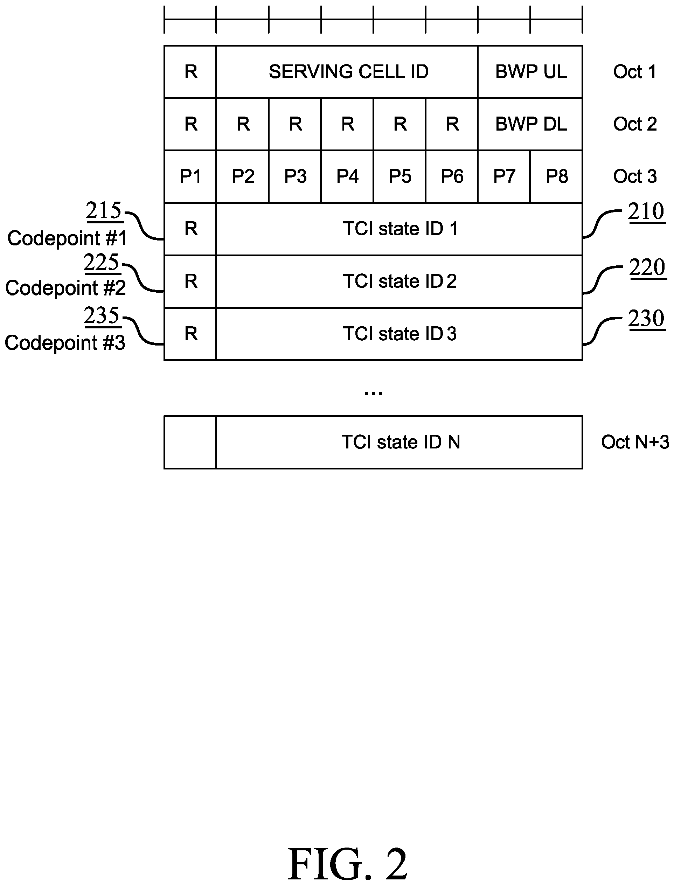

FIG. 2 illustrates a sequence of codepoints indicating TCI State IDs with one TCI State ID per codepoint in accordance with at least some example embodiments. A downlink control message may comprise first indicated TCI state 210 of the sequence, first codepoint 215 indicating first indicated TCI state 210, second indicated TCI state 220 of the sequence, second codepoint 225 indicating second indicated TCI state 220, third indicated TCI state 230 of the sequence and third codepoint 235 indicating third indicated TCI state 230. The downlink control message may be used to configure UE 110 to perform sequential TCI state switch operation. The downlink control message may comprise one or more TCI state codepoints 215, 225, 235 mapped to one or more TCI states 210, 220, 230, for downlink only or downlink and uplink. That is, each codepoint 215, 225, 235 may comprise, or indicate, one TCI State ID. e.g., joint for uplink and downlink, or two TCI State IDs, one for downlink and one for uplink.

The one or more codepoints 215, 225, 235 may be listed in the order in which the TCI states 210, 220, 230 indicated by the one or more codepoints 215, 225, 235 are to be used by UE 110. For example, the codepoints may be listed in the order of codepoint IDs in the downlink control message. First listed codepoint 215 may indicate the first codepoint UE 110 is configured to be switched to, second codepoint 225 may indicate the second one in the sequence and third codepoint 225 may indicate the third one in the sequence. For example, UE 110 may apply, based on determining that first codepoint 215 is listed sequentially before second codepoint 225 in the downlink control message, at least one first TCI state 210 sequentially before at least one second TCI state 220.

UE 110 may determine the switching from the Nth codepoint to the N+1 codepoint based on at least one criterion, such as a time interval. The time interval may be referred to as a time period as well. During the time interval, the at least one TCI state in the at least one codepoint may be considered as activated/indicated. UE 110 may perform said TCI switching based on at least one time interval, wherein the at least one time interval determines when to switch from at least one TCI state to at least one other TCI state.

The downlink control message may comprise one or more codepoints 215, 225, 235 and each codepoint may indicate a time interval and at least one TCI state 210, 220, 230 to which to switch for the time interval. The downlink control message may comprise time interval fields, wherein each time interval field indicates a time interval of one TCI state switch.

The one or more codepoints may comprise, e.g., first codepoint 215 indicating at least one first TCI state 210, i.e., the ID(s) of at least one first TCI state 210, to be used for a first time interval and second codepoint 225 indicating at least one second TCI state 220 i.e., the ID(s) of at least one second TCI state 220, to be used for a second time interval, wherein the first and second time intervals are non-overlapping. UE 110 may thus apply the at least one first TCI state 210 during the first time interval and the at least one second TCI state 220 during the second time interval.

Alternatively, the downlink control message may comprise a time interval field indicating a time interval of said TCI state switching, i.e., the same time interval for all codepoints and associated TCI state(s). In such a case, the first time interval (for first TCI state 210) and the second time interval (for second TCI state 220) may be non-overlapping but have the same length, for performing periodic TCI state switching. One time interval may thus determine a periodicity of said periodic TCI state switching. For example, UE 110 may switch to a next codepoint, such as second codepoint 225, after a time interval for said periodic TCI state switching has passed from a previous switch, to first codepoint 210. Similarly, UE 110 may switch to a next codepoint, such as third codepoint 235, after a time interval for said periodic TCI state switching has passed from a previous switch, to second codepoint 220.

In some example embodiments, the downlink control message configuring the time domain sequence may be identified by a control message identifier, such as Logical Channel ID, LCID.

In some example embodiments, the downlink control message may comprise a Medium Access Control, MAC, Control Element, CE.

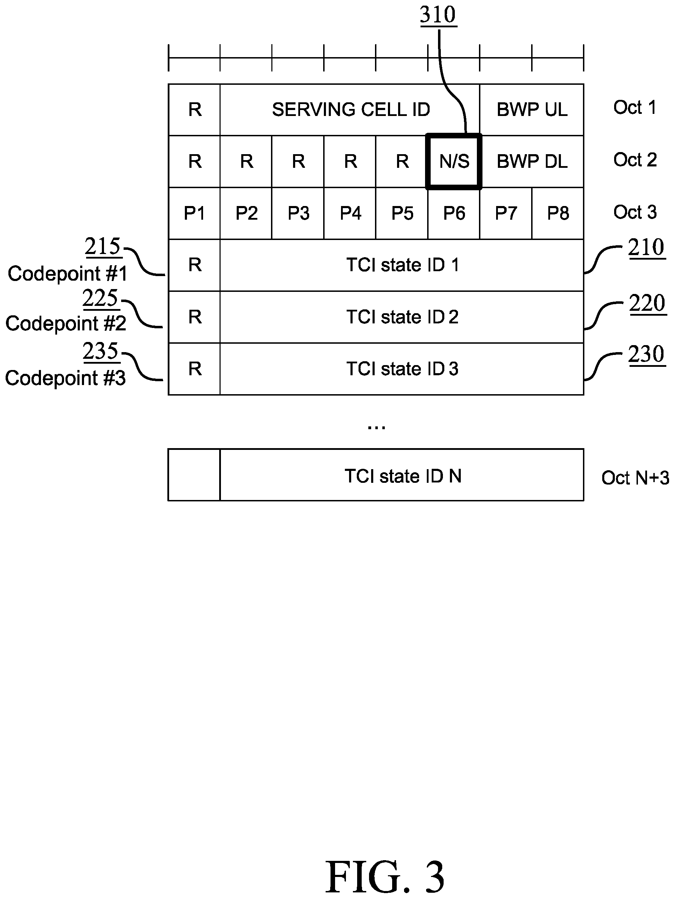

FIG. 3 illustrates an indication for sequential or non-sequential TCI state activation in accordance with at least some example embodiments. Field 310 in the downlink control message may be used to indicate whether the one or more codepoints 215, 225, 235 listed in the message are to be interpreted as a time domain sequence of TCI states that are activated/indicated to UE 110, or to be interpreted as a set of activated TCI states. That is, field 310 may indicate whether the one or more codepoints 215, 225, 235 indicate a time domain sequence of TCI states or a set of TCI states to be activated (i.e., legacy activation).

For example, if the downlink control message indicates the time domain sequence, the set of codepoints signalled in the message are to be interpreted as a sequence of codepoints for which UE 110 switches to in the sequence. Alternatively, if the downlink control message indicates legacy activation (a set of activated TCI states to be activated, i.e., non-sequential activation) or does not indicate sequential activation of TCI States, UE 110 may interpret the downlink control message as an activation message for the one or more codepoints 215, 225, 235.

As an example, field 310 may be an "N/S" field as illustrated in FIG. 3, wherein a first value (e.g. 0 / N) may indicate (non-sequential) TCI state activation/indication and a second value (e.g. 1 / S) may indicate sequential TCI state activation/indication.

In some example embodiments, for duration of the Nth time interval/period the one or more codepoints associated with the said time interval may be considered as activated/indicated TCI states (e.g. before switching to the N+1 time interval/period).

In some example embodiments, the downlink control message configuring the activation/indication/switching of TCI states may further comprise of indication or configuration that indicates the message being for prediction-based beam management (e.g. switching/activation/indication of TCI states). The indication may be, e.g., a field in the message. Alternatively, or additionally, the indication may be, e.g., a header field of the message, header field indicating that the control message is for prediction-based TCI state activation/indication/switching.

In some example embodiments, a time interval for periodic TCI state switching may be fixed. The downlink control message may be used to configure activation/indication of TCI states, and the TCI state switching interval for the configured TCI State switching sequence may be fixed. The time interval for said periodic TCI switching may be expressed in the order of milliseconds, such as 20 ms, 40 ms, 80 ms or 160 ms. In some examples, the time interval may be expressed in number of symbols, slots, frames or the like. The time interval may be configured using Radio Resource Control, RRC, signalling.

Each TCI state indicated by the codepoint may be activated in sequence, wherein the time interval for switching may be based on a configuration of the network, such as wireless network node 120. Based prediction period, multiples of prediction period, or the measurement period for the measurements may be used as input for the predictor. UE 110 may be configured to switch sequentially between codepoints based on the fixed time interval.

In some example embodiments, codepoints 215, 225, 235 may associate with a specific, different time interval. For example, first codepoint 215 may be associated with a first time interval, such as 20 ms, while second codepoint 225 may be associated with a second time interval, such as 40 ms. That is, at least one first TCI state 210 indicated by first codepoint 215 (possibly using the first TCI state ID) may be used during the first time interval while at least one second TCI state 220 indicated by second codepoint 225 (possibly using the second TCI state ID) may be used during the second time interval. In such a case, the downlink control message may comprise one or more time interval fields each indicating the specific time interval for each of the set of one or more codepoints.

Alternatively, one or more codepoints 215, 225, 235 may share a common time interval, such as 20 ms. That is, the common time interval may define how long at least one first TCI state 210, at least one second TCI state 220 and at least one third TCI state 230 are to be used. The downlink control message may comprise the common time interval.

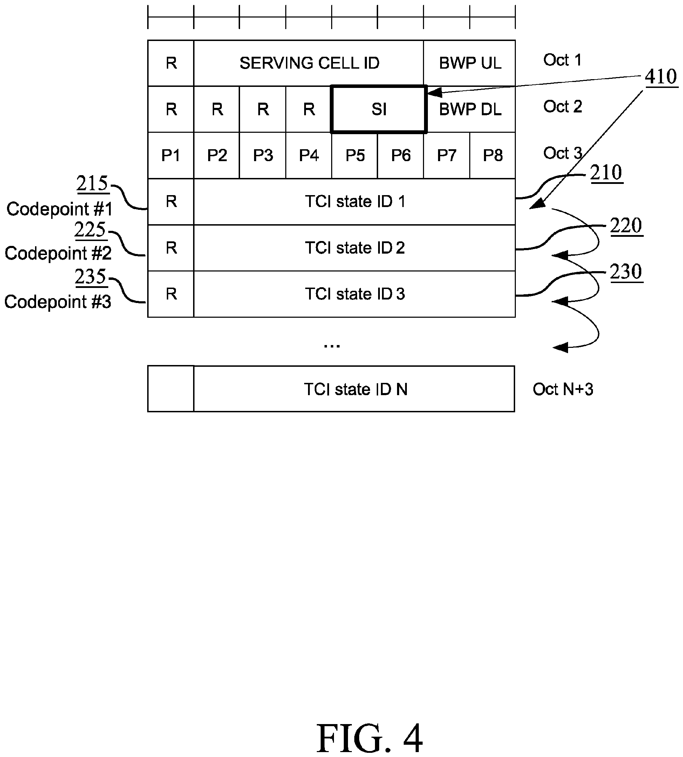

FIG. 4 illustrates a field in a control message indicating switching period between sequential codepoints in accordance with at least some example embodiments. Field 410 may be used in the downlink control message to indicate a periodicity configuration. Field 410 may be thus referred to as a periodicity configuration field. The periodicity configuration may be a part of the downlink control message.

The downlink control message may indicate one or more codepoints 215, 225, 235 for sequential TCI state switching and comprise field 410 indicating the periodicity/interval for the switching sequence. Field 410 may indicate a time interval for at least one first TCI state 210, at least one second TCI state 220 and at least one third TCI state 230. That is, field 410 may indicate the common time interval for one or more codepoints 215, 225, 235. Field 410 may be a Switching Interval, SI, field. Alternatively, field 410 or may be referred as activation/indication period or activation/indication duration for TCI States indicated by the one or more codepoints associated with the time period. As an example, the TCI State IDs indicated by the TCI codepoints associated with the time period (indicated by field 410) may be considered as activated (or indicated) TCI states for the duration of the time period.

As an example, field 410 may be an N bit field and it may indicate a predefined set of time interval values that is applied for each codepoint listed in the message. With 2-bit value, {00,01,10,11} may be codepoints and mapped to, e.g., RRC configured set of periodicity values (such as 20 ms, 40ms, 80ms, 160ms), or the like. If a codepoint is associated with a time interval of 20ms, UE 110 may determine to switch to the next codepoint after 20ms. Alternatively or additionally, if a codepoint is associated with a time interval of 20ms, the codepoint is considered to be activated (or indicated) codepoint (i.e. the TCI State ID(s) of the codepoint(s)).

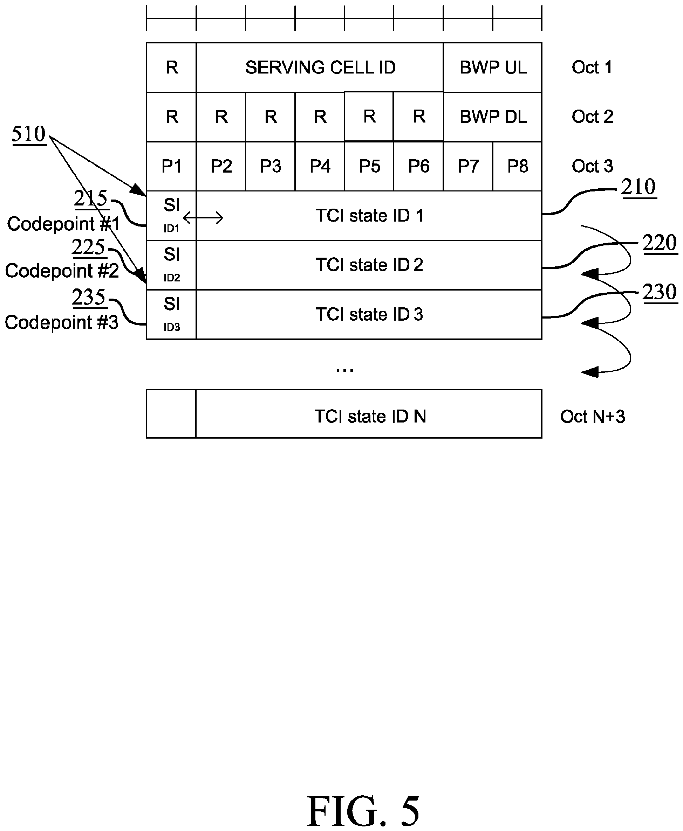

FIG. 5 illustrates a downlink control message providing of set of TCI states per step of a sequence in accordance with at least some example embodiments. Each field 510 in the downlink control message may indicate a time interval for a different codepoint and at least one TCI state. Fields 510 may be SI fields. Fields 510 may indicate time duration for which the associated TCI states indicated by the (TCI) codepoints are considered to be activated/indicated.

The downlink control message may indicate one or more codepoints for sequential TCI state switch and comprise separate field 510 for each of the codepoints 215, 225, 235 listed in the downlink control message. That is, one field 510 may indicate the time interval for one codepoint, for switching to the next codepoint in the time domain configuration. In one example, field 510 associated with one or more codepoints may indicate time interval/period/duration for which the associated TCI State IDs are considered to be activated/indicated.

As an example, field 510 may be an N bit field may and it may indicate a predefined set of time interval values that is applied for each codepoint listed in the message. With 2-bit value, {00,01,10,11} may be codepoints and mapped to, e.g., RRC configured set of periodicity values (20 ms, 40ms, 80ms, 160ms), or the like. If a codepoint is associated with a time interval of 20ms, UE 110 may determine to switch to the next codepoint after 20ms.

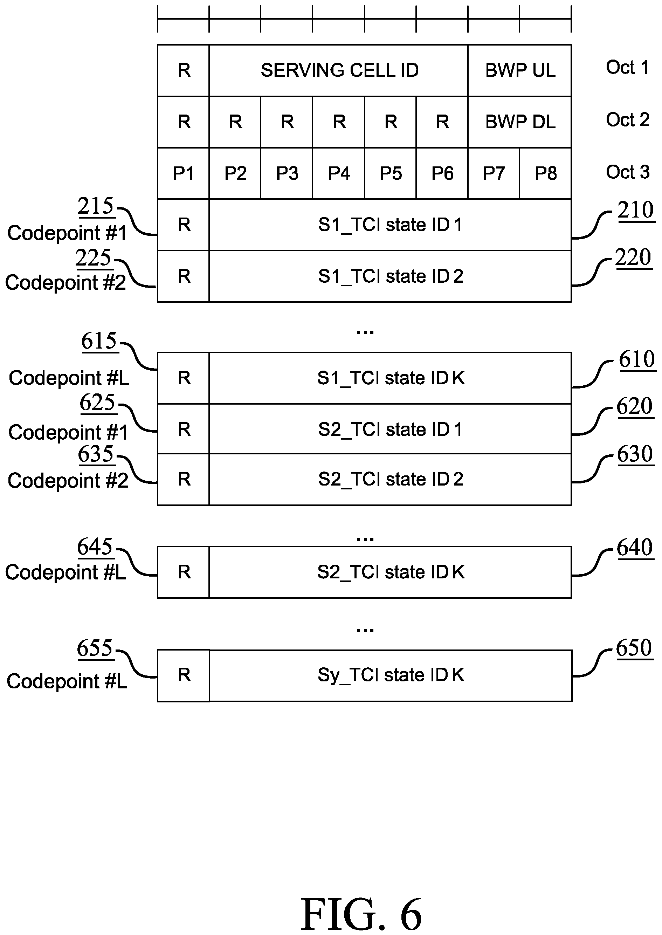

FIG. 6 illustrates a TCI state ID/codepoint specific SI field in accordance with at least some example embodiments. A set of codepoints may be associated with a same time instant. As an example, the set of codepoints may be e.g. 1st -Kth codepoint associated with the same time instant. If multiple TCI states are associated with the same time instant, the codepoints of each time instance may be considered as "activated TCI states". The activated TCI states, if multiple are provided, may be associated with the same time instant and be indicated using Downlink Control Information, DCI, based beam indication during the period when the TCI states are active.

DCI may indicate codepoint #1...L. The indication may refer to the set of S1-Sy (steps) TCI states that are activated at a given time interval. In some example embodiments, one of the TCI states may be by default the indicated TCI state. As an example, the lowest codepoint of the currently activated TCI states may be the indicated TCI State. Alternatively, the network, such as wireless network node 120, may (further) use DCI to indicate one of the codepoints to be the indicated TCI state (or states or set of states).In some example embodiments, UE 110 may reach the end of the time interval for the last codepoint listed in the downlink control message providing the sequence of codepoints. In such a case, UE 110 may determine that the last activated TCI state indicated by the codepoint is valid until a new control message for TCI state indication or activation is received. Alternatively, UE 110 may determine to indicate an event related to the use of the last active TCI state and transmit a request related to a new TCI sequence to the network, such as wireless network node 120. The request may be provided via L1-signaling (e.g. Scheduling Request, SR) or MAC-signaling (e.g. MAC CE via PUSCH). UE 110 may thus determine that a last configured TCI state of said TCI switching has been reached and a time interval associated with the last configured TCI state has been passed and based on said determination, use the last configured TCI state until receiving another downlink control message or indicate to the wireless network that the time interval associated with the last configured TCI state has been passed.

In some example embodiments, a TCI codepoint may comprise of downlink or joint TCI State ID. In some example embodiments, a TCI codepoint may comprise of downlink and uplink TCI State IDs.

In some example embodiments, a TCI codepoint may indicate two or more sets of TCI state. Each set may correspond to a TCI states IDs for a CORESETpoolindex or TCI states used for the first indicated TCI State. Alternatively, each set may correspond to a TCI states IDs for a CORESETpoolindex or TCI states used for the second indicated TCI State or each set may comprise of DL and/or UL TCI State IDs.

In some example embodiments, the indicated TCI states in the sequence may refer to reference signals originating only from a second set of beams (Set B), only from a first set of beams (Set A), or a mix of reference signals originating from sets B and A. UE 110 may be indicated to perform TCI state selection according to said rules when there is no differentiation between the TCI states based on the origin of the reference signals to sets B and A. Alternatively, UE 110 may be indicated to perform TCI state selection only on the beams corresponding to Set B, ignoring the TCI states characterising beams from set A. Alternatively, UE 110 may be indicated to perform TCI state selection only on the beams corresponding to Set A, ignoring the TCI states characterising beams from set B.

In some example embodiments, UE 110 may be configured to switch to the first TCI state ID associated with the first (set of) codepoint(s) in the sequence provided by the downlink control message after acknowledging the downlink control message, or after a delay or application time or after time period after acknowledging the downlink control message.

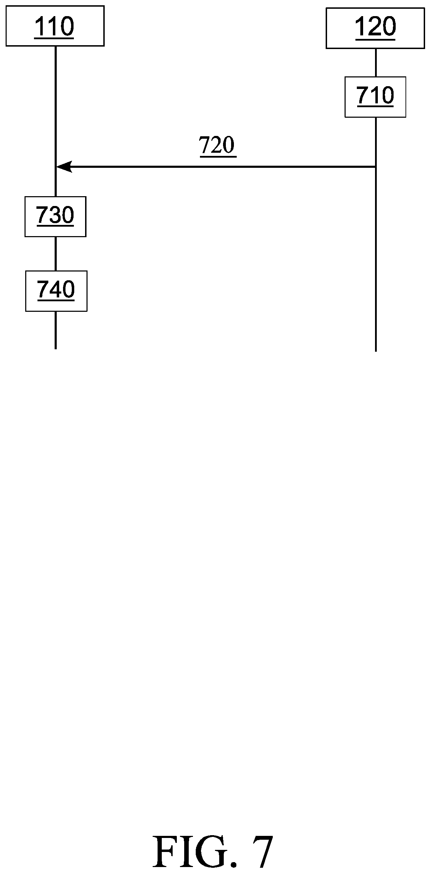

FIG. 7 illustrates a signaling diagram in accordance with at least some example embodiments. On the vertical axes are disposed, from the left to the right, UE 110 and wireless network node 120. Time advances from the top towards the bottom.

At step 710, wireless network node 120 may determine at least one first TCI state for use by UE 110 during a first time interval and at least one second TCI state for use by UE 110 during a second time interval, wherein the first time interval and the second time interval are non-overlapping. At step 720, wireless network node 120 may transmit, to UE 110, a downlink control message comprising a configuration for TCI state switching using the at least one first TCI state and the at least one second TCI state. The configuration may be a time domain configuration or a periodicity configuration.

At step 730, UE 110 may determine, based on the configuration, the at least one first TCI state for use during the first time interval and the at least one second TCI state for use during the second time interval. For example, UE 110 may determine, based on a first codepoint in the downlink control message, to apply the at least one first TCI state during the first time interval. UE 110 may also determine, based on a second codepoint in the downlink control message, to apply the at least one second TCI state during the second time interval.

At step 740, UE 110 may perform, based on said determinations, said TCI state switching. For example, UE 110 may apply at least one first TCI state 210 during the first time interval and apply, after the first time interval, at least one second TCI state 220 during the second time interval. In some example embodiments, UE 110 may determine that the configuration comprises one or more codepoints and each codepoint associates with a time interval and indicates at least one TCI state to which to switch for the time interval, for performing TCI state switching and perform, based on said one or more codepoints, said TCI switching.

UE 110 may thus determine, upon receiving (and/or acknowledging the reception of) the downlink control message configuring UE 110 to perform sequential TCI state switch operation, to switch to the TCI state ID or set of TCI state IDs, e.g., according to the codepoint indicated by the downlink control message, based on the configured or indicated periodicity (i.e., time interval). For example, UE 110 may determine, based on first codepoint 215 in the downlink control message, to apply at least one first TCI state 210 during the first time interval and determine, based on second codepoint 225 in the downlink control message, to apply at least one second TCI state 220 during the second time interval.

In some example embodiments, UE 110 may determine to apply, based on the reception of the downlink control message configuring UE 110 to perform sequential TCI state switch operation, the TCI State IDs indicated by the TCI codepoint of the sequence of TCI codepoint for the predetermined duration/interval.

In some example embodiments, UE 110 may, upon determining that a predetermined time interval for the currently applied TCI state by the TCI codepoint has passed (or next interval/duration starts), determine to apply the next at least one TCI State ID indicated by the next TCI codepoint in sequence for the predetermined duration.

In some example embodiments, based on the reception of the downlink control message configuring UE 110 to perform sequential TCI state switch operation, UE 110 may determine to apply each of the TCI States indicated by the sequence of TCI codepoints for the predetermined time interval. The predetermined time interval may be based on at least partly on the received duration value via RRC signaling.

In some example embodiments, UE 110 may, upon determining that the downlink control message configuring UE 110 to perform sequential TCI state switch operation comprises an indication of the time interval, apply the at least one TCI state indicated by the codepoint as indicated TCI state(s) for the time interval provided by the downlink control message.

In some example embodiments, UE 110 may perform, upon receiving the control message configuring UE 110 to perform, at least one of beam prediction (UE beam prediction) and/or reporting of the prediction results, or measurements (for, e.g., NW beam prediction). For example, UE 110 may receive another control message comprising a configuration to configuring UE 110 to perform at least one of: a beam prediction, reporting of results of the beam prediction or reporting measurements and perform, based on said another control message, at least one of: the beam prediction, reporting of results of the beam prediction or reporting measurements.

Upon receiving the configuration that UE 110 is to perform sequential TCI state switch operation, UE 110 may apply each of the at least TCI State for the duration/interval and determine the time interval based on at least one of:
- at least partly based on RRC configuration;
- at least partly based on prediction period / multiples of prediction period;
- at least partly based on prediction reporting period;
- at least partly based on measurement period for the measurements used as input for the predictor;
- at least partly based on measurement period for the measurements to be reported to network.

In some example embodiments, based on the reception of the downlink control message configuring UE 110 to perform sequential TCI state switch operation, UE 110 may determine that at least one predetermined duration or an instance in a sequence of TCI states instances is associated with a plurality of TCI states. UE 110 may then determine the TCI states to be as activated TCI States for DCI-based beam indication and receive a DCI indicating a codepoint value indicating a TCI State from the set of activated TCI States. UE 110 may further apply the TCI State as indicated TCI State within the predetermined duration. For example, UE 110 may determine that at least one time interval TCI state is associated with a plurality of TCI states, determine the plurality of TCI states to be as activated TCI States for downlink control indication, DCI, -based beam indication, receive a DCI indicating one or more codepoints, wherein each codepoint indicates at least one TCI State from the activated TCI states and apply the at least one TCI state as an indicated TCI state within the at least one time interval.

In some example embodiments, UE 110 may apply the at least one TCI state indicated by the codepoints in the sequence of codepoints for reception or transmission of at least one of the: PDCCH, PDSCH, PUCCH, PUSCH, Sounding Reference Signal, SRS, uplink signal/channel or downlink signal/channel, for the determined duration.

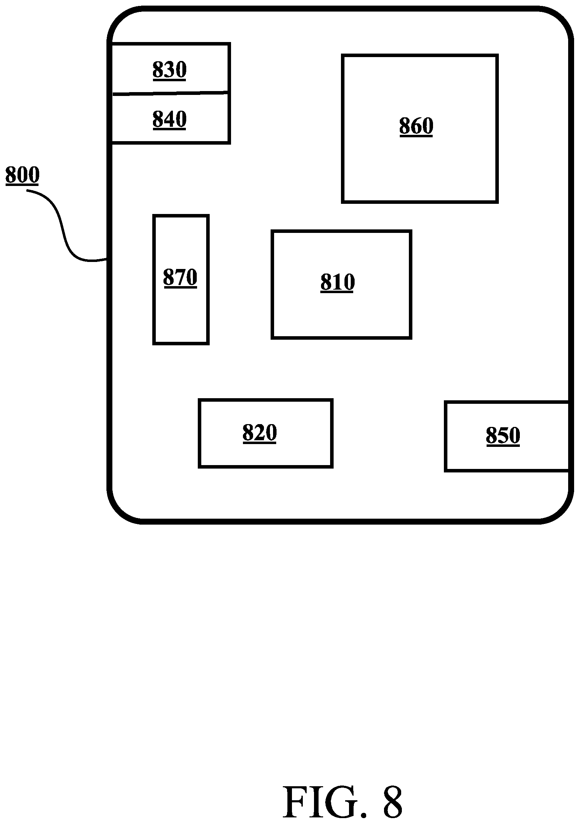

FIG. 8 illustrates an example apparatus capable of supporting at least some example embodiments. Illustrated is device 800, which may comprise, for example, UE 110 or wireless network node 120, or a control device configured to control the functioning thereof, possibly when installed therein. Comprised in device 800 is processor 810, which may comprise, for example, a single- or multi-core processor wherein a single-core processor comprises one processing core and a multi-core processor comprises more than one processing core. Processor 810 may comprise, in general, a control device. Processor 810 may comprise more than one processor. Processor 810 may be a control device.. Processor 810 may comprise at least one application-specific integrated circuit, ASIC. Processor 810 may comprise at least one field-programmable gate array, FPGA. Processor 810 may be means for performing method steps in device 800. Processor 810 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 800 may comprise memory 820. Memory 820 may comprise random-access memory and/or permanent memory. Memory 820 may comprise at least one RAM chip. Memory 820 may comprise solid-state, magnetic, optical and/or holographic memory, for example. Memory 820 may be at least in part accessible to processor 810. Memory 820 may be at least in part comprised in processor 810. Memory 820 may be means for storing information. Memory 820 may comprise computer instructions that processor 810 is configured to execute. When computer instructions configured to cause processor 810 to perform certain actions are stored in memory 820, and device 800 overall is configured to run under the direction of processor 810 using computer instructions from memory 820, processor 810 and/or its at least one processing core may be considered to be configured to perform said certain actions. Memory 820 may be at least in part comprised in processor 810. Memory 820 may be at least in part external to device 800 but accessible to device 800.

Device 800 may comprise a transmitter 830. Device 800 may comprise a receiver 840. Transmitter 830 and receiver 840 may be configured to transmit and receive, respectively, information in accordance with at least one cellular or non-cellular standard. Transmitter 830 may comprise more than one transmitter. Receiver 840 may comprise more than one receiver. Transmitter 830 and/or receiver 840 may be configured to operate in accordance with Global System for Mobile communication, GSM, Wideband Code Division Multiple Access, WCDMA, Long Term Evolution, LTE, and/or 5G/NR standards, for example.

Device 800 may comprise a Near-Field Communication, NFC, transceiver 850. NFC transceiver 850 may support at least one NFC technology, such as Bluetooth, Wibree or similar technologies.

Device 800 may comprise User Interface, UI, 860. UI 860 may comprise at least one of a display, a keyboard, a touchscreen, a vibrator arranged to signal to a user by causing device 800 to vibrate, a speaker and a microphone. A user may be able to operate device 800 via UI 860, for example to accept incoming telephone calls, to originate telephone calls or video calls, to browse the Internet, to manage digital files stored in memory 820 or on a cloud accessible via transmitter 830 and receiver 840, or via NFC transceiver 850, and/or to play games.

Device 800 may comprise or be arranged to accept a user identity module 870. User identity module 870 may comprise, for example, a Subscriber Identity Module, SIM, card installable in device 800. A user identity module 870 may comprise information identifying a subscription of a user of device 800. A user identity module 870 may comprise cryptographic information usable to verify the identity of a user of device 800 and/or to facilitate encryption of communicated information and billing of the user of device 800 for communication effected via device 800.

Processor 810 may be furnished with a transmitter arranged to output information from processor 810, via electrical leads internal to device 800, to other devices comprised in device 800. Such a transmitter may comprise a serial bus transmitter arranged to, for example, output information via at least one electrical lead to memory 820 for storage therein. Alternatively to a serial bus, the transmitter may comprise a parallel bus transmitter. Likewise processor 810 may comprise a receiver arranged to receive information in processor 810, via electrical leads internal to device 800, from other devices comprised in device 800. Such a receiver may comprise a serial bus receiver arranged to, for example, receive information via at least one electrical lead from receiver 840 for processing in processor 810. Alternatively to a serial bus, the receiver may comprise a parallel bus receiver.

Device 800 may comprise further devices not illustrated in FIG. 8. For example, where device 800 comprises a smartphone, it may comprise at least one digital camera. Some devices 800 may comprise a back-facing camera and a front-facing camera, wherein the back-facing camera may be intended for digital photography and the front-facing camera for video telephony. Device 800 may comprise a fingerprint sensor arranged to authenticate, at least in part, a user of device 800. In some example embodiments, device 800 lacks at least one device described above. For example, some devices 800 may lack a NFC transceiver 850 and/or user identity module 870.

Processor 810, memory 820, transmitter 830, receiver 840, NFC transceiver 850, UI 860 and/or user identity module 870 may be interconnected by electrical leads internal to device 800 in a multitude of different ways. For example, each of the aforementioned devices may be separately connected to a master bus internal to device 800, to allow for the devices to exchange information. However, as the skilled person will appreciate, this is only one example and depending on the example embodiment various ways of interconnecting at least two of the aforementioned devices may be selected without departing from the scope of the example embodiments.

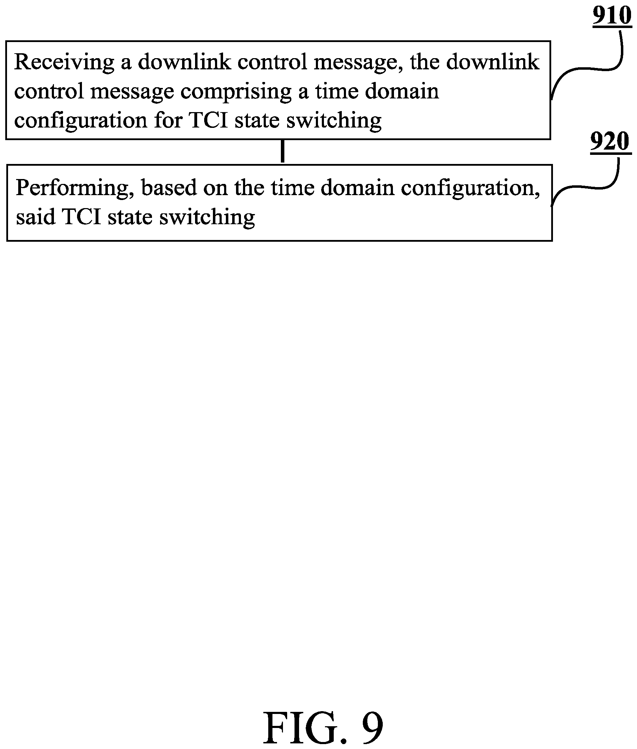

FIG. 9 is a flow graph of a first method in accordance with at least some example embodiments. The phases of the illustrated first method may be performed by UE 110 or by a control device configured to control the functioning thereof, possibly when installed therein.

The first method may comprise, at step 910, receiving a downlink control message, the downlink control message comprising a time domain configuration for TCI state switching. The first method may also comprise, at step 920, performing, based on the time domain configuration, said TCI state switching.

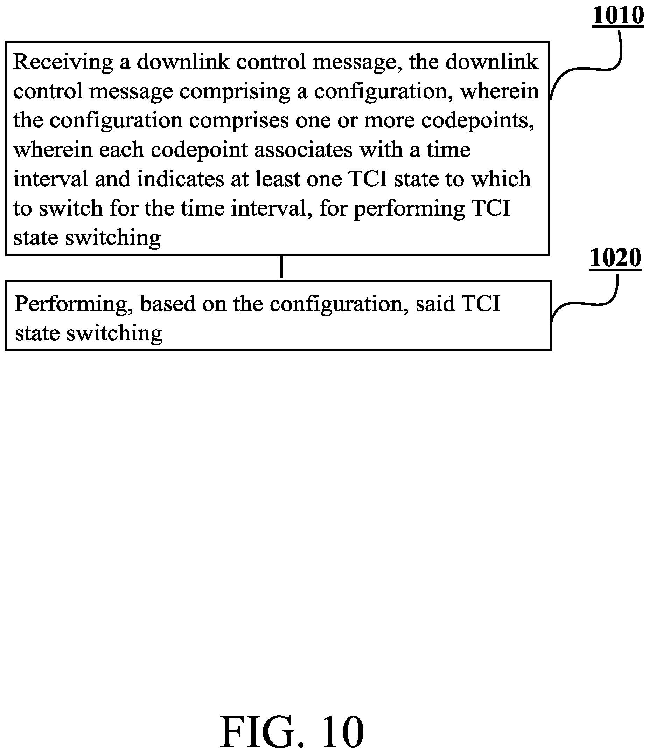

FIG. 10 is a flow graph of a second method in accordance with at least some example embodiments. The phases of the illustrated first method may be performed by UE 110 or by a control device configured to control the functioning thereof, possibly when installed therein.

The second method may comprise, at step 1010, receiving a downlink control message, the downlink control message comprising a configuration, wherein the configuration comprises one or more codepoints, wherein each codepoint associates with a time interval and indicates at least one TCI state to which to switch for the time interval, for performing TCI state switching. The second method may also comprise, at step 1020, performing, based on the configuration, said TCI state switching.

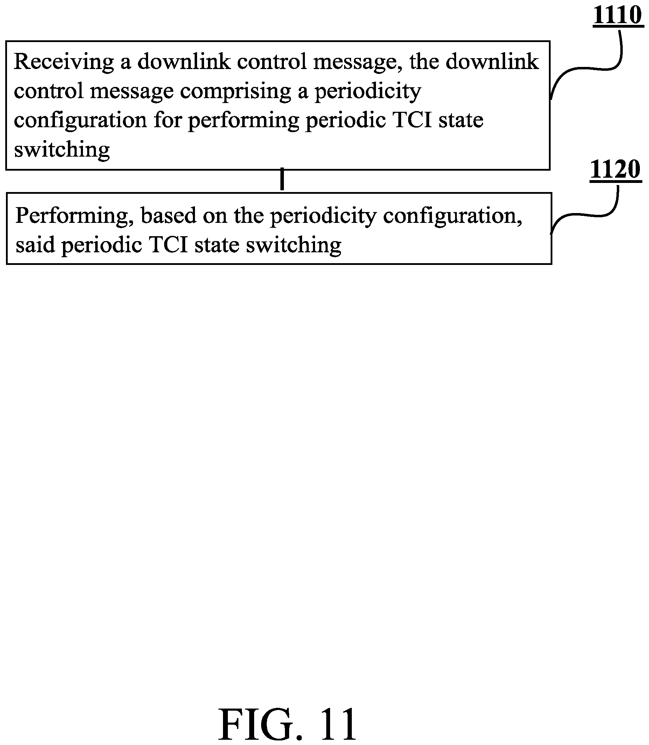

FIG. 11 is a flow graph of a third method in accordance with at least some example embodiments. The phases of the illustrated first method may be performed by UE 110 or by a control device configured to control the functioning thereof, possibly when installed therein.

The third method may comprise, at step 1110, receiving a downlink control message, the downlink control message comprising a periodicity configuration for performing periodic TCI state switching. The third method may also comprise, at step 1120, performing, based on the periodicity configuration, said periodic TCI state switching.

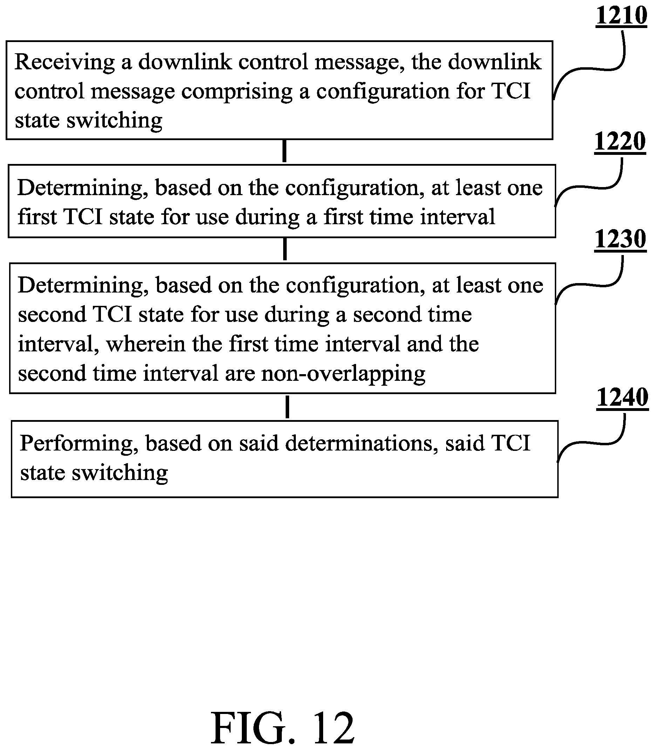

FIG. 12 is a flow graph of a fourth method in accordance with at least some example embodiments. The phases of the illustrated first method may be performed by UE 110 or by a control device configured to control the functioning thereof, possibly when installed therein.

The fourth method may comprise, at step 1210, receiving a downlink control message, the downlink control message comprising a configuration for transmission configuration indicator, TCI, state switching. The fourth method may also comprise, at step 1220, determining, based on the configuration, at least one first TCI state for use during a first time interval. In addition, the fourth method may comprise, at step 1230, determining, based on the configuration, at least one second TCI state for use during a second time interval, wherein the first time interval and the second time interval are non-overlapping. Finally, the fourth method may comprise, at step 1240, performing, based on said determinations, said TCI state switching.

It is to be understood that the example embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, such as, for example, UE 110 or wireless network node 120, may comprise means for carrying out the example embodiments described above and any combination thereof.

In an example embodiment, a computer program may be configured to cause a method in accordance with the example embodiments described above and any combination thereof. In an example embodiment, a computer program product, embodied on a non-transitory computer readable medium, may be configured to control a processor to perform a process comprising the example embodiments described above and any combination thereof.

In an example embodiment, an apparatus, such as, for example, UE 110 or wireless network node 120, may comprise at least one processor, and at least one memory including computer program code, wherein the at least one memory and the computer program code are configured to, with the at least one processor, cause the apparatus at least to perform the example embodiments described above and any combination thereof.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the disclosure. One skilled in the relevant art will recognize, however, that the disclosure can be practiced without one or more of the specific details, or with other methods, components, materials, etc. In other instances, well-known structures, materials, or operations are not shown or described in detail to avoid obscuring aspects of the disclosure.

While the forgoing examples are illustrative of the principles of the example embodiments in one or more particular applications, it will be apparent to those of ordinary skill in the art that numerous modifications in form, usage and details of implementation can be made without the exercise of inventive faculty, and without departing from the principles and concepts of the disclosure. Accordingly, it is not intended that the disclosure be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some example embodiments find industrial application in cellular communication networks, for example in 3GPP networks, wherein beamforming is used.

### ACRONYMS LIST

- 3GPP: 3rd Generation Partnership Project
- BM: Beam Management
- BS: Base Station
- CE: Control Element
- DCI: Downlink Control Information
- DL: Downlink
- DU: Distributed Unit
- GSM: Global System for Mobile communication
- IAB: Integrated Access and Backhaul
- ID: Identifier
- IoT: Internet of Things
- LTE: Long-Term Evolution
- MAC: Medium Access Control
- M2M: Machine-to-Machine
- MT: Mobile Terminal
- NFC: Near-Field Communication
- NR: New Radio
- PDCCH: Physical Downlink Control Channel
- PDSCH: Physical Downlink Shared Channel
- PUCCH: Physical Uplink Control Channel
- PUSCH: Physical Uplink Shared Channel
- QCL: Quasi Co-Location
- RAN: Radio Access Network
- RAT: Radio Access Technology
- RRC: Radio Resource Control
- SI: Switching Interval
- SR: Scheduling Request
- SRS: Sounding Reference Signal
- TCI: Transmission Configuration Indicator
- UE: User Equipment
- UI: User Interface
- UL: UL
- WCDMA: Wideband Code Division Multiple Access
- WiMAX: Worldwide Interoperability for Microwave Access
- WLAN: Wireless Local Area Network

### REFERENCE SIGNS LIST

| | |
|---|---|
| 110 | UE |
| 115 | Beams |
| 120 | Wireless network node |
| 125, 135 | Wired interfaces |
| 130 | Core Network |
| 210, 220, 230, 610, 620, 630, 640, 650 | Indicated TCI states in the sequence |
| 215, 225, 235, 615, 625, 635, 645, 655 | Codepoints #1 to #3 |
| 310 | Field indicating a switch |
| 410 | Field indicating a general switching time interval (and/or the activation/indication interval) |
| 510 | Field indicating an individual switching time interval (and/or the activation/indication interval) |
| 710 - 740 | Steps in the signaling diagram of FIG. 7 |
| 800 - 870 | Structure of the apparatus of FIG. 8 |
| 910 - 920 | Phases of the method in FIG. 9 |
| 1010 - 1020 | Phases of the method in FIG. 10 |
| 1110 - 1120 | Phases of the method in FIG. 11 |
| 1210 - 1240 | Phases of the method in FIG. 12 |

## Claims

1. An apparatus comprising at least one processing core and at least one memory storing instructions that, when executed by the at least one processing core, cause the apparatus at least to:
- receive a downlink control message, the downlink control message comprising a configuration for transmission configuration indicator, TCI, state switching;
- determine, based on the configuration, at least one first TCI state for use during a first time interval;
- determine, based on the configuration, at least one second TCI state for use during a second time interval, wherein the first time interval and the second time interval are non-overlapping; and
- perform, based on said determinations, said TCI state switching.

2. An apparatus according to claim 1, wherein the apparatus is further configured at least to:
- apply the at least one first TCI state during the first time interval; and
- apply, after the first time interval, the at least one second TCI state during the second time interval.

3. An apparatus according to claim 1 or claim 2, wherein the apparatus is further configured at least to:
- determine, based on a first codepoint in the downlink control message, to apply the at least one first TCI state during the first time interval; and
- determine, based on a second codepoint in the downlink control message, to apply the at least one second TCI state during the second time interval.

4. An apparatus according to claim 3, wherein the apparatus is further configured at least to:
- apply, based on determining that the first codepoint is listed sequentially before the second codepoint in the downlink control message, the at least one first TCI state sequentially before the at least one second TCI state.

5. An apparatus according to any of the preceding claims, wherein the apparatus is further configured at least to:
- determine that the downlink control message comprises a field indicating whether one or more codepoints in the downlink control message indicate a time domain sequence of TCI states or a set of TCI states to be activated.

6. An apparatus according to any of the preceding claims, wherein the configuration is a time domain configuration comprising at least one of: indication of time domain sequence of TCI states, time domain sequence of TCI states, switching interval, or switching periodicity.

7. An apparatus according to any of claims 1 to 5, wherein the apparatus is further configured at least to:
- determine that the configuration is a periodicity configuration for periodic TCI state switching; and
- perform said TCI switching by performing said periodic TCI state switching.

8. An apparatus according to any of the preceding claims, wherein the at least one processing core and the at least one memory further cause the apparatus at least to:
- determine that the configuration comprises one or more codepoints and each codepoint associates with a time interval and indicates at least one TCI state to which to switch for the time interval, for performing TCI state switching; and
- perform, based on said one or more codepoints, said TCI switching.

9. An apparatus according to any of the preceding claims, wherein the apparatus is further configured at least to:
- receive another control message comprising a configuration to configure the apparatus to perform at least one of: a beam prediction, reporting of results of the beam prediction or reporting measurements; and
- perform, based on said another control message, at least one of: the beam prediction, reporting of results of the beam prediction or reporting measurements.

10. An apparatus according to any of the preceding claims, wherein the apparatus is further configured at least to:
- determine at least one time interval for said TCI state switching based on at least one of:
∘ radio resource control, RRC, configuration;
∘ prediction period and/or multiples of prediction periods;
∘ prediction reporting period;
∘ measurement period for the measurements used as input for the predictor; or
∘ measurement period for the measurements to be reported to network.

11. An apparatus according to any of the preceding claims, wherein the apparatus is further configured at least to:
- determine that at least one time interval TCI state is associated with a plurality of TCI states;
- determine the plurality of TCI states to be as activated TCI States for downlink control indication, DCI, -based beam indication;
- receive a DCI indicating one or more codepoints, wherein each codepoint indicates at least one TCI State from the activated TCI states; and
- apply the at least one TCI state as an indicated TCI state within the at least one time interval.

12. An apparatus according to any of the preceding claims, wherein the apparatus is further configured at least to:
- apply said TCI switching for reception or transmission of at least one of the following Physical Downlink Control Channel, PDCCH, Physical Downlink Shared Channel, PDSCH, Physical Uplink Control Channel, PUCCH, Physical Uplink Shared Channel, PUSCH, Sounding Reference Signal, SRS, uplink signal/channel or downlink signal/channel.

13. An apparatus comprising at least one processing core and at least one memory storing instructions that, when executed by the at least one processing core, cause the apparatus at least to:
- determine at least one first transmission configuration indicator, TCI, state for use by a user equipment during a first time interval;
- determine at least one second TCI state for use by the user equipment during a second time interval, wherein the first time interval and the second time interval are non-overlapping;
- transmit, to the user equipment, a downlink control message comprising a configuration for TCI state switching using the at least one first TCI state and the at least one second TCI state.

14. A method, comprising:
- receiving, by a user equipment, a downlink control message, the downlink control message comprising a configuration for transmission configuration indicator, TCI, state switching;
- determining by the user equipment, based on the configuration, at least one first TCI state for use during a first time interval;
- determining by the user equipment, based on the configuration, at least one second TCI state for use during a second time interval, wherein the first time interval and the second time interval are non-overlapping; and
- performing by the user equipment, based on said determinations, said TCI state switching.

15. A computer program comprising instructions which, when the program is executed by an apparatus, cause the apparatus to carry out:
- receiving a downlink control message, the downlink control message comprising a configuration for transmission configuration indicator, TCI, state switching;
- determining, based on the configuration, at least one first TCI state for use during a first time interval;
- determining, based on the configuration, at least one second TCI state for use during a second time interval, wherein the first time interval and the second time interval are non-overlapping; and
- performing, based on said determinations, said TCI state switching.
